# EUROPÄISCHE PATENTSCHRIFT

(11) **EP 1 019 884 B1**
(45) Veröffentlichungstag und Bekanntmachung des Hinweises auf die Patenterteilung: **08.08.2001**
(21) Anmeldenummer: 98956785.4
(22) Anmeldetag: 21.09.1998
(51) Int. Cl.: G08G 5/06, B64F 1/00, G05D 1/00

(54) **VERFAHREN UND VORRICHTUNG ZUR AUTOMATISCH UNTERSTÜTZEN FÜHRUNG VON LUFTFAHRZEUGEN ZU EINER PARKPOSITION UND MANAGEMENTSYSTEM HIERFÜR**
METHOD AND DEVICE FOR THE AUTOMATICALLY-ASSISTED GUIDING OF PLANES TO A PARKING PLACE AND MANAGEMENT SYSTEM THEREFOR
PROCEDE ET DISPOSITIF DE GUIDAGE A ASSISTANCE AUTOMATIQUE D'AERONEFS VERS UNE PLACE DE STATIONNEMENT, ET SYSTEME DE GESTION ASSOCIE

(30) Priorität: 30.09.1997 DE 19743213
(43) Veröffentlichungstag der Anmeldung: 19.07.2000
(73) Patentinhaber: SIEMENS AKTIENGESELLSCHAFT, 80333 München (DE)
(72) Erfinder: CASTOR, Robert, D-85716 Unterschleissheim (DE)
(86) Internationale Anmeldenummer: DE9802799
(87) Internationale Veröffentlichungsnummer: WO9917263

(56) Entgegenhaltungen:
- EP-A- 0 459 295
- WO-A-96/09207
- WO-A-97/32291
- DE-A- 4 009 668
- DE-C- 19 602 607

## Beschreibung

Die vorliegende Erfindung betrifft ein Verfahren zur automatisch unterstützten Führung von Luftfahrzeugen zu einer Parkposition, mit welchem der Steuerung eines Luftfahrzeuges automatisch Korrekturanweisungen für Richtung und Geschwindigkeit übermittelt werden, wobei mittels wenigstens einer Videokamera ein in einer durch einen Erfassungsbereich der wenigstens einen Videokamera liegenden Parkzone befindliches Luftfahrzeug mit der Videokamera erfaßt, die von der Videokamera gelieferten Signale in einer Auswerteeinheit zur Ermittlung der aktuellen Position des Luftfahrzeuges und der Korrekturanweisungen zum Erreichen einer vorgegebenen Position verarbeitet werden. Die Erfindung betrifft darüber hinaus eine Vorrichtung zur Durchführung des Verfahrens und ein Managementsystem, welches eine Planung, eine Überwachung und eine zentrale Kontrolle der Gate-Belegung auf Flugplätzen ermöglicht.

Beispielsweise aus der DE 40 09 668 A1 sind ein Verfahren und eine Vorrichtung zum positionsgenauen Abstellen von Flugzeugen bekannt. Dabei wird ständig die aktuelle Position eines Flugzeugs durch die Auswertung mindestens eines vom Flugzeug hervorgerufenen und von einem Detektor durch die Luft gemessenen wenigstens eindimensionalen Signalfeldes ermittelt. Nach Auswertung der Signale werden Anweisungen zur Positionskorrektur eines Luftfahrzeuges ausgegeben. Als Sensor wird eine Videokamera vorgeschlagen, deren Signale mit Referenzfeldern verglichen und so die Positionskorrektoren ermittelt werden. Zur Ausgabe dienen Signaltafeln, die vom Luftfahrzeugführer optisch erkennbar sind. Dieses vorbekannte Verfahren macht bereits die Verwendung von Druckmeldern, Induktionsschleifen und dergleichen überflüssig.

Ein weiteres Verfahren sowie eine Vorrichtung zum positionsgenauen Führen eines Luftfahrzeuges zu einer Parkposition wird in der EP 0 459 295 offenbart. Hierbei wird mittels im Parkbereich angeordneter CCD-Videokameras die Antikollisionsleuchte eines zu führenden Luftfahrzeuges aufgenommen. Eine Verarbeitungseinheit errechnet aus dem gewonnenen Videosignal das Zentrum der Antikollisionsleuchte. Die so gewonnene Information wird einer weiteren Verarbeitungseinheit zugeführt, in welcher die Position der Antikollisionsleuchte relativ zu der Parkposition bestimmt wird, woraufhin Korrekturanweisungen erzeugt werden, welche den Luftfahrzeugführern mittels einer Signaltafel angezeigt werden.

Auf moderneren Flughäfen sollen gelandete Flugzeuge möglichst schnell und weitgehend automatisiert zu einer genauen Halteposition geführt werden. Üblicherweise ist die Halteposition in bezug auf ein Flughafenterminal, einem sogenannten Gate, festgelegt.

Das vorbekannte Verfahren und die vorbekannte Vorrichtung unter Verwendung einer Videokamera und einer Anzeigesignaltafel lösen dieses Problem dem Grunde nach in einem an sich geschlossenen System, wobei das von der Videokamera zur Verfügung gestellte Signalfeld mit Referenz-Signalfeldern verglichen und die Korrekturen ermittelt und angezeigt werden. Das vorbekannte System weist Nachteile in bezug auf die Sicherheit auf, da eine Überprüfung und Überwachung aufwendig sind. Das Kontrollpersonal hat, wie derzeit üblich, auf Kontrollmonitoren die Belegungs- und Planungsdaten sowie Basisparameter zur Verfügung. Davon unabhängig wird das vorbekannte Positionierverfahren unter Verwendung der beschriebenen Vorrichtung durchgeführt. Eine Überprüfung ist allenfalls über zusätzliche technische Einheiten möglich und ein Eingriff kann allenfalls über herkömmliche Kommunikationswege erfolgen. Darüber hinaus ist ein zentrales Management einer Vielzahl von Belegungsvorgängen unter Einbindung des vorbekannten Positionierverfahrens nicht möglich, da keine Informationskopplung vorgesehen ist.

Vor diesem Hintergrund liegt der vorliegenden Erfindung die Aufgabe zugrunde, ein Verfahren, eine Vorrichtung und ein Managementsystem zur automatisch unterstützten Führung von Luftfahrzeugen zu einer Parkposition bereitzustellen, bei welchen eine erforderliche Erhöhung der Sicherheit und eine organisierte und weitestgehend zentralisierte Überwachung und Steuerung ermöglicht sind.

Zur verfahrensseitigen Lösung dieser Aufgabe wird mit der Erfindung vorgeschlagen ein Verfahren der eingangs genannten Art, wobei die von der Videokamera gelieferten Signale in der Auswerteeinheit weiterhin zu Videosequenzen verarbeitet werden, aus den von der Videokamera übermittelten Signalen eine Identifizierung erfaßter Nicht-Luftfahrzeug-Objekte durchgeführt wird und die Korrekturanweisungen zur Übermittlung an die Luftfahrzeugsteuerung sowie die Videosequenzen für die integrierte Darstellung zusammen mit weiteren Überwachungsdaten auf einem Kontrollmonitor bereitgestellt werden.

Verfahrensseitig wird somit die Möglichkeit des Abrufens von Videosequenzen zur visuellen Überwachung eines Parkiervorganges von einem Kontrollarbeitsplatz in den Ablauf der Ermittlung und Übermittlung von Korrekturanweisungen integriert. Dieses erfindungsgemäße Verfahren ermöglicht somit dem Kontrollpersonal, üblicherweise einen Ground-Control- oder Ground-Service-Gruppe angehörig, welches mit der Organisation und dem Belegungsmanagement der Flugzeugterminals betraut ist, von einem zentralen Kontrollplatz aus, an dem die üblichen Belegungs-Planungs-Daten, Überwachungsparameter und dergleichen dargestellt werden, Videosequenzen auf dem gleichen Kontrollmonitor einzusehen, um sich von dem richtigen und ordnungsgemäßen Ablauf eines geplanten Parkiervorganges überzeugen zu können. Weiterhin erfolgt durch die Videoerfassung eine Gesamtobjekterfassung im Parkzonenbereich. Sämtliche statischen oder dynamischen Objekte im Parkzonenbereich werden erfaßt und identifiziert. Das System ist somit in der Lage, Servicefahrzeuge, Einrichtungen und dergleichen anhand von vorgegebenen und gespeicherten Referenzsignalen zu identifizieren und bei der Führung des Luftfahrzeuges zu berücksichtigen.

Durch dieses erfindungsgemäße Verfahren wird einerseits die Sicherheit erheblich erhöht, wodurch dem zeitgemäßen Erfordernis an Abwicklungssicherheit aufgrund erheblich erhöhten Flugaufkommens genüge getan wird, andererseits wird ein vollständiges zentrales Management realisierbar.

Das Video-Überwachungsverfahren umfaßt den Abwicklungsbereich, um mit der wenigstens einen Videokamera ab einer bestimmten Position, in welcher das Luftfahrzeug die von der Videokamera erfaßbare Parkzone erreicht, die aktuelle Position des Luftfahrzeugs zu erfassen, hinsichtlich Position und Ausrichtung zu verarbeiten und mit Sollwerten zu vergleichen, um daraus Anweisungen in bezug auf Richtungsänderung und Geschwindigkeitsänderung zu errechnen und zur Anzeige bereitzustellen. Dabei wird mit der Erfindung vorgeschlagen, daß neben Positionsdaten auch der Fahrzeugtyp automatisch ermittelt wird. Der Luftfahrzeugtyp beeinflußt die Errechnung der Korrekturwerte, da unterschiedliche Luftfahrzeugtypen hinsichtlich Geschwindigkeits- und Richtungsänderungen sich unterschiedlich verhalten. Entsprechend können die Korrekturwerte aufgrund unterschiedlicher Typreferenzen beeinflußt werden.

Mit der Erfindung wird weiterhin vorgeschlagen, daß die Signale von zwei hinsichtlich des optischen Erfassungsbereiches parallel angeordneten Videokameras ausgewertet werden. Einerseits wird durch die Redundanz der Sensorik die Sicherheit erheblich erhöht, andererseits ergeben sich Möglichkeiten wie eine Selbst-Fünktions-Überprüfung des Systems, Auswahl des jeweils geeignet positionierten Sensors in Abhängigkeit von der Größe des Luftfahrzeugs und dergleichen. Vorzugsweise werden die wenigstens zwei Videokameras im vorgegebenen Abstand übereinander angeordnet. Die Kameras befinden sich vorzugsweise an der Außenseite des Flugterminals in der Nähe einer gedachten Geraden durch den Haltepunkt und den Fahrweg des Luftfahrzeugs kurz vor der Halteposition.

In vorteilhafter Weise werden die Videosequenzen als digitale Sequenzen bereitgestellt. Dadurch wird ermöglicht, daß die Videosequenzen hinsichtlich Position, Größe und Zoomfaktor auf dem Kontrollmonitor positioniert werden. Dieser modulare Ansatz ermöglicht es dem Kontrollpersonal, je nach aktueller Wichtigkeit die Überwachungsdaten, die Videosequenzen, Planungsdaten und dergleichen hinsichtlich Position und Größe auf dem Kontrollmonitor anzuordnen. Darüber hinaus besteht die Möglichkeit, die Darstellung der Videosequenzen zeitlich zu kontrollieren. Es können Schnelldurchläufe erfolgen, aber auch zeitlupenähnliche Durchläufe, durch welche die Betrachtungs- und Auswertungsmöglichkeiten erheblich erhöht werden.

Mit Vorteil wird weiterhin vorgeschlagen, daß die Videosequenzen verschiedener Terminals für einen beliebigen Abruf bereitgestellt werden. Die Kontrollperson kann somit zwischen unterschiedlichen Terminals umschalten oder sich gleichzeitig mehrere Videosequenzen auf dem Monitor positionieren.

Mit Vorteil wird weiterhin vorgeschlagen, daß die Videosequenzen gespeichert werden. Diese besondere verfahrensseitige Möglichkeit stellt einen erheblichen Sicherheitsfaktor dar, da die gespeicherten Videosequenzen für eine Sensibilisierung des Erfassungssystems, zur Verbesserung der Korrekturerrechnungen und zur späteren Überprüfung von möglicherweise fehlerhaft durchgeführten Parkiervorgängen herangezogen werden können.

In vorteilhafter Weise werden die Daten von Videokameras unterschiedlicher Parkzonen in einer Auswerteeinheit verarbeitet. Diese Mehrzonenfähigkeit verbessert die Koordinierung und Kontrollierbarkeit und erhöht die Wirtschaftlichkeit des Systems.

Verfahrensgemäß werden die Korrekturwerte an die Luftfahrzeugführer optisch übermittelt. Hierzu eignen sich insbesondere Signaltafeln, die in mit einem Blick erfaßbarer Weise Signale für die Richtung, links/rechts, die Geschwindigkeit in der Vorausfahrt und einen Stopp darstellen können.

Mit besonderem Vorteil wird weiterhin vorgeschlagen, daß Umweltparameter wie Helligkeit, Temperatur, Sichtverhältnisse und dergleichen erfaßt und entweder bei der Ermittlung der Korrekturwerte und/oder bei der Verbesserung der Videosequenzen im Sinne einer Filterung zur Erhöhung der Sichtbarkeit berücksichtigt werden.

Mit der Erfindung wird ein Verfahren bereitgestellt, welches die exakte Positionierung eines Luftfahrzeugs innerhalb der letzten Phase eines Parkvorganges weitestgehend automatisch geführt ermöglicht und darüber hinaus die Möglichkeiten der zentralen Überwachung, Kontrolle und des zentralen Managements beinhaltet. Dabei ist das Verfahren mit einfachen Mitteln auf wirtschaftliche Weise durchführbar. Für die Signalübermittlung stehen die üblichen Leitungs-Übermittlungsverfahren einschließlich Glasfaseroptik als auch die üblichen funktechnischen Verfahren einschließlich der Nutzung der Mobilfunksysteme zur Verfügung.

Vorrichtungsseitig wird zur technischen Lösung der Erfindung vorgeschlagen eine Vorrichtung zur automatisch unterstützten Führung von Luftfahrzeugen zu einer Parkposition gemäß dem oben genannten Verfahren, mit wenigstens einer in einem Parkzonenbereich angeordneten Videokamera, einer mit dieser verbundenen Auswerteeinheit, die der Auswertung der Videosignale zur Ermittlung von Korrekturwerten zur Führung des Luftfahrzeuges und zur Bereitstellung von Videosequenzen dient, einer Signalübermittlungseinheit zur Übermittlung der Korrekturwerte an das Luftfahrzeug und einer Videosequenzübermittlungseinheit zur Bereitstellung der Videosequenzen zum Abruf durch Kontrollpersonal.

Die erfindungsgemäße Vorrichtung umfaßt auf Seiten des Flugterminals die wenigstens eine Videokamera als Sensor und die wenigstens eine Übermittlungseinheit für die Korrekturwerte. Als Übermittlungseinheit kommt gemäß einem Vorschlag der Erfindung eine optische Signaltafel in Frage. Alternativ können auch andere Signalübermittlungsmöglichkeiten genutzt werden.

Mit Vorteil wird vorgeschlagen, daß zwei Videokameras im Parkzonenbereich mit im wesentlichen gleichen Erfassungsbereichen angeordnet werden. Beide Kameras können beispielsweise senkrecht mit vorgegebenem Abstand übereinander positioniert und parallel ausgerichtet werden. So kann je nach Größe des Luftfahrzeuges die obere Kamera für größere, die untere für kleinere Luftfahrzeuge verwendet werden. Auch können die Kameras gleichzeitig zu Zwecken der Systemüberprüfung und/ oder redundant zu Zwecken der Erhöhung der Systemsicherheit eingesetzt werden.

Die Auswerteeinheit ist in vorteilhafter Weise ein Rechner, der beispielsweise einen Multiplexer für die Videokameras, einen sogenannten Frame-Grabber zur Bildsequenzaufnahme, einen Prozessor zur Datenauswertung insbesondere Kantenextraktion und Sollwert-Ermittlung, einen Speicher und die erforderlichen Ausgabeschnittstellen umfaßt.

Gemäß einem Vorschlag der Erfindung können mehrere Auswerteeinheiten mit einer Zentraleinheit gekoppelt sein, um eine zentrale Nutzung gemeinsamer Einheiten zu ermöglichen, beispielsweise gemeinsame Speicher, Prozessoren für Spezialberechnungen und dergleichen.

Die Vorrichtung umfaßt gemäß einem besonders vorteilhaften Vorschlag der Erfindung eine Kontrolleinheit, die beispielsweise ein Rechner ist und wenigstens einen Kontrollmonitor umfaßt, der zur integrierten Darstellung von Überwachungs- und Planungsdaten sowie Videosequenzen eingesetzt ist.

Gemäß einem weiteren vorteilhaften Vorschlag der Erfindung ist die Kontrolleinheit mit einem Flughafenmanagementsystem gekoppelt, so daß Belegungs-, Planungs-, Budgetierungsdaten und dergleichen ausgetauscht werden können. So kann beispielsweise vom Managementsystem bereits eine luftfahrzeugtypische Information wie Fluggesellschaft, Flugnummer, Luftfahrzeugtyp und dergleichen bereitgestellt werden und über die Kontrolleinheit oder direkt auch der Auswerteeinheit zur Verfügung gestellt werden. Diese kann dann diese Daten bereits bei der Ermittlung der Korrekturwerte berücksichtigen, ohne eine Luftfahrzeugidentifikation durchführen zu müssen. Zumindest wird die Geschwindigkeit bei der Luftfahrzeugidentifkation erheblich erhöht, wobei auch eine Sicherheitserhöhung gewährleistet ist.

Gemäß einem weiteren vorteilhaften Vorschlag umfaßt die Vorrichtung eine Speichereinheit zur archivierten Speicherung von Videosequenzen. Diese stehen dann zur Verfügung, um nachträglich zu unterschiedlichen Zwecken ausgewertet zu werden.

Schließlich wird mit der Erfindung vorgeschlagen, daß im Bereich der Signalübermittlungseinheit ein Bedienpanel für eine vor Ort befindliche Bedienperson angeordnet ist. Eine im Bereich des Luftfahrzeugterminals befindliche Bedienperson ist somit in der Lage, direkt Signale über die Signalübermittlungseinheit an die Luftfahrzeugführung abzugeben, beispielsweise wenn ein Ausfall des Systems oder andere Sicherheitserwägungen dies erforderlich machen.

Mit der Erfindung wird eine modular und übersichtlich organisierte Vorrichtung für die automatisch unterstützte Führung von Luftfahrzeugen in die Parkposition bereitgestellt, welche bei einem hohen Grad von Bediensicherheit eine Integration der Videoüberwachung in die Datenübersicht für das Kontrollpersonal ermöglicht.

Für die Verbesserung des Managements und der Organisation der Parkbereiche auf Flugplätzen wird mit der Erfindung weiterhin vorgeschlagen ein Managementsystem zum Betrieb der automatisch unterstützten Führung von Luftfahrzeugen zu einer Parkposition nach dem Verfahren nach Anspruch 1 und mit einer Vorrichtung nach Anspruch 13, zusätzlich umfassend eine zentrale Kontrolleinheit mit einem Monitor zur integrierten Darstellung von Überwachungsdaten und den von einer Auswerteeinheit zur Auswertung der von wenigstens einer Videokamera im Parkzonenbereich bereitgestellten Videosignale zugeführten Videosequenzen, Ein- und Ausgabeeinheiten und einem Rechner.

Das erfindungsgemäße Managementsystem ermöglicht die integrierte Kontrolle und Steuerung des Parkierablaufs von zentralen Arbeitsplätzen. Dadurch ergeben sich eine Reihe sicherheitstechnischer und wirtschaftlicher Vorteile. Entsprechend ausgebildetes Personal wird in die Lage versetzt, von zentralen Kontrolleinheiten eine Planung und Überwachung der Terminalbelegung, gegebenenfalls integriert in das Managementsystem der gesamten Bodenkontrolle, durchzuführen, gleichzeitig abrufgemäß Videosequenzen zur visuellen Überwachung von automatisch geführten Parkiervorgängen durchzuführen und unter Umständen direkt auf die Signalübermittlungseinheiten einzuwirken, wenn dies aus sicherheitstechnischen oder sonstigen Gründen erforderlich ist.

Gemäß einem vorteilhaften Vorschlag der Erfindung umfaßt das Managementsystem eine Option zum Anwählen einer Parkzone, um die entsprechenden Videosequenzen zu beobachten. Gemäß einem weiteren Vorschlag der Erfindung sind die Positionen und Größen der Datenanzeigen und der Anzeigen der Videosequenzen variierbar. Durch diese Möglichkeit kann sich die Bedienperson wunschgemäß nur Daten, nur Videosequenzen, mehrere Daten/Videosequenzgruppen und dergleichen auf den Kontrollmonitor holen.

Gemäß einem vorteilhaften Vorschlag der Erfindung umfaßt das Managementsystem die Möglichkeit zur Speicherung und zum Abruf von übermittelten Videosequenzen zu unterschiedlichen Zwecken.

Schließlich ermöglicht das Managementsystem die Übermittlung von Korrekturanweisungen zur Übersteuerung und/oder Ergänzung der automatisch ermittelten Korrekturanweisungen.

Das erfindungsgemäße Managementsystem ermöglicht die Integration der Verfahren und Vorrichtungen zur automatisch unterstützten Führung von Luftfahrzeugen in die Parkposition in das Überwachungs- und Planungssystem eines Flughafens mit einfachen und wirkungsvollen Mitteln.

Weitere Vorteile und Merkmale der Erfindung ergeben sich aus der folgenden Beschreibung anhand der Figuren. Dabei zeigen:
- FIG 1: eine schematische Darstellung der Betriebssituation im Flugvorfeld;
- FIG 2: eine Darstellung eines Ausführungsbeispiels eines Parkiervorganges;
- FIG 3: eine Darstellung der Anordnung der Videokameras;
- FIG 4: eine Darstellung der Einheiten einer Anordnung gemäß einem Ausführungsbeispiel der Erfindung;
- FIG 5: eine alternative Anordnung mit zwei Parkplätzen gemäß FIG 4;
- FIG 6: eine beispielhafte Darstellung der Elemente einer Auswerteeinheit;
- FIG 7: eine Darstellung eines Ausführungsbeispiels für eine Anzeigetafel;
- FIG 8: eine schematische Darstellung des Organisationsschemas einer Gate-Planung unter Verwendung der Erfindung;
- FIG 9: eine schematische Darstellung eines Ausführungsbeispiels einer Monitoranzeige;
- FIG 10: eine schematische Darstellung eines Ausführungsbeispiels einer Monitoranzeige und
- FIG 11: eine schematische Darstellung einer Videosequenz.

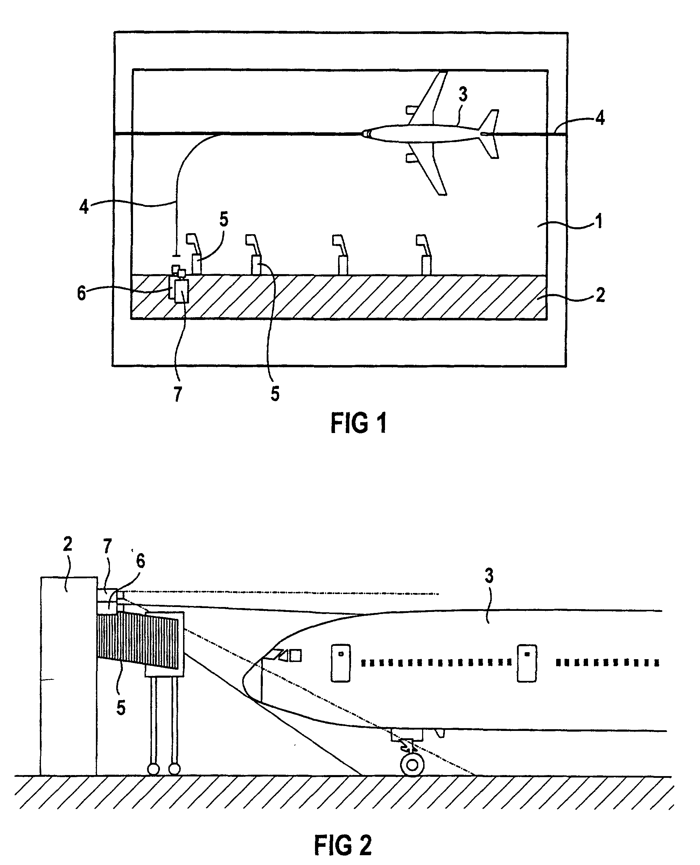

In FIG 1 ist grob übersichtlich eine Flugvorfeldsituation gezeigt. Im Flugvorfeldbereich 1 vor einem Terminalgebäude 2 befindet sich auf einem sogenannten Taxiway, üblicherweise markiert mit auf dem Boden gezeichneten Linien, ein Flugzeug 3. Der Taxiway 4 ist ergänzt um die zu den einzelnen Gates 5 führenden Linien.

Im Bereich eines jeden Gates sind zwei Videokameras 6, 7 im wesentlichen übereinander und zueinander parallel angeordnet. Im vorliegenden Fall wird davon ausgegangen, daß von der Gate-Planung dem anrollenden Flugzeug 3 das in FIG 1 ganz links gezeigte Gate zugewiesen ist. Etwa wenn das Flugzeug 3 nach Abbiegen vom geraden Taxiway die gerade auf das Gate 5 führende Linie erreicht hat, beginnt die automatische Erfassung, Auswertung und Führung des Flugzeugs.

Diese Situation ist grob in einer Seitenansicht in FIG 2 gezeigt, wobei von den beiden Kameras im gezeigten Ausführungsbeispiel die untere, Kamera Nr. 6, im Einsatz ist. Die beiden Kameras können vollständig redundant, gleichzeitig oder in Abhängigkeit beispielsweise von der Größe des Flugzeugs eingesetzt werden.

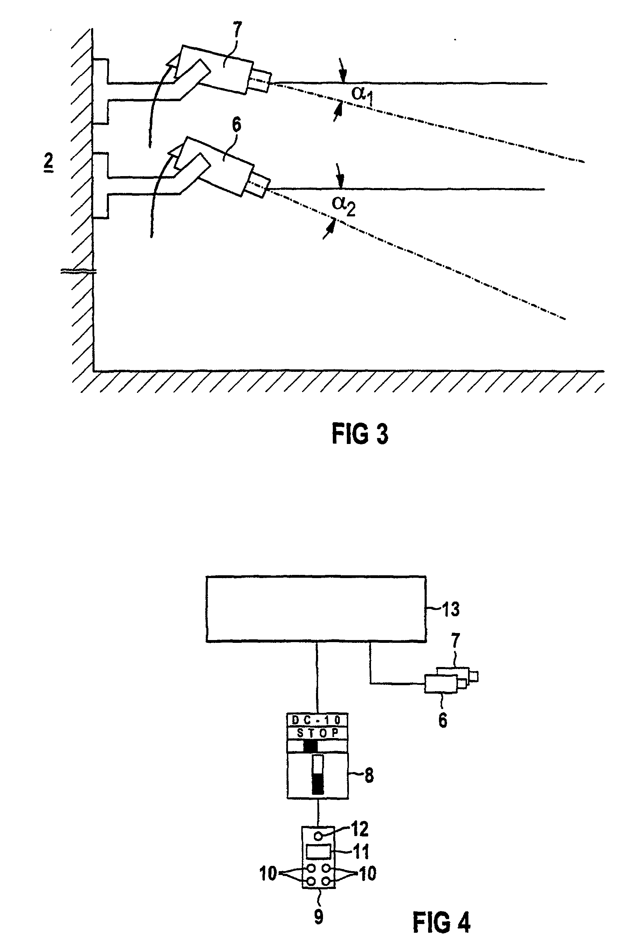

FIG 3 zeigt schematisch die Anordnung der Kameras 6 und 7. Diese sind im wesentlichen übereinander angeordnet, im wesentlichen zueinander parallel, wobei jedoch die Erfassungswinkel α1 und α2 unterschiedlich sind. Im gezeigten Ausführungsbeispiel ist der Erfassungswinkel α1 der oberen Kamera 7 kleiner als der Erfassungswinkel α2 der unteren Kamera. Als Anordnungshöhe für die untere Kamera haben sich etwa 12 m als zweckmäßig erwiesen.

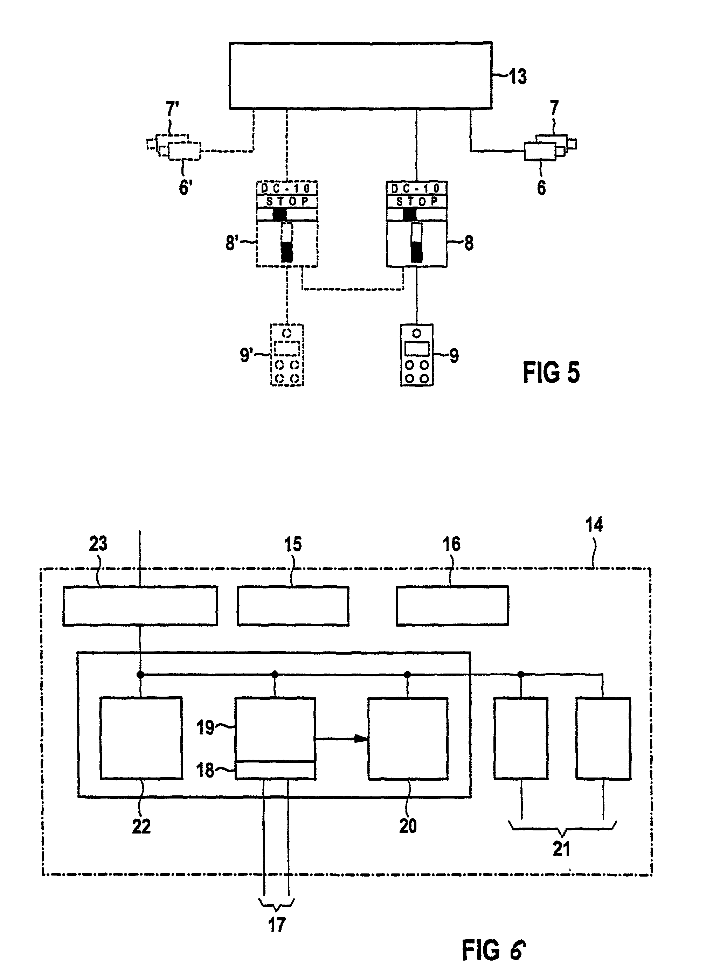

In den Figuren 4 und 5 ist schematisch ein Ausführungsbeispiel für eine erfindungsgemäße Vorrichtung dargestellt. Die Kameras 6 und 7 sind an eine Auswerteeinheit 13 angeschlossen. In dieser werden neben dem Flugzeugtyp auch die aktuelle Flugzeugposition aus den Videosignalen ermittelt. Aus der aktuellen Position und dem Vergleich mit dem Soll-Parkpunkt ergeben sich Korrekturanweisungen hinsichtlich Richtung und Geschwindigkeit. Auf einer Anzeigetafel 8, die ebenfalls im Flugvorfeld und von den Piloten gut sichtbar angeordnet ist, werden diese Informationen den Piloten zur Anzeige gebracht. Diese können dann den Signalen folgend das Flugzeug exakt parkieren. Davon ausgehend, daß sich die Piloten exakt an die Anweisungen halten, erfolgt ein Parkieren in einem Radius von etwa 25 cm um die Soll-Parkposition.

In FIG 4 ist darüber hinaus ein Bedienpanel 9 gezeigt, welches ein Bedienfeld 10, eine Anzeige 11 und einen Notknopf 12 aufweist. Ein derartiges Bedienpanel dient der Sicherheit. Im Notfall kann eine im Flugvorfeld befindliche Bedienperson ein derartiges Panel so bedienen, daß das Flugzeug entweder sofort stoppt oder auf die Parkposition geführt wird. Sämtliche Außengehäuse, das heißt Kameragehäuse, Gehäuse der Anzeigetafel und des Bedienfeldes sind wasserdicht.

FIG 5 zeigt eine entsprechende Anordnung, wobei jedoch die zu einem weiteren Gate gehörenden Kameras 6¹, 7¹, die weitere Anzeigetafel 8¹ und ein weiteres Bedienpanel 9¹ gestrichelt dargestellt sind. Diese Einheiten sind jedoch mit der gleichen Auswerteeinheit 13 verbunden. Eine derartige Anordnung ist beispielsweise bei Gates sinnvoll, wo auf beiden Seiten eines verfahrbaren Gates Centerlines angeordnet sind.

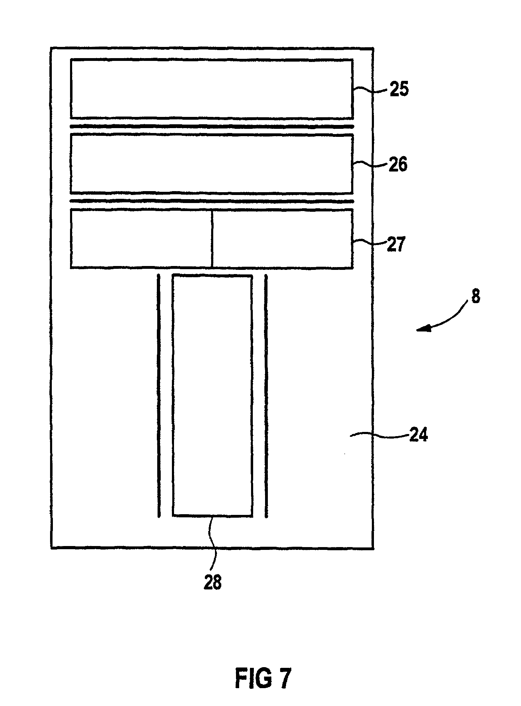

FIG 6 zeigt grob schematisch den Aufbau einer Auswerteeinheit. Diese verfügt über Kameranschlüsse 17, einen Multiplexer 18 und einen sogenannten Frame-Grabber 19, einen Beschleuniger 20 und vorzugsweise serielle Ausgangsanschlüsse 21 für die Anzeigetafel. Alle Einheiten sind in einem wasserdichten Gehäuse 14 angeordnet, und zwar neben einer Stromversorgung 15 und einer thermostatgesteuerten Heizung 16. Die Videosignalauswertung und die Anzeigesignalerrechnung erfolgt mittels des Prozessors 22. Vorzugsweise serielle Anschlüsse 23 dienen der Ausgabe von Betriebsparametern, errechneten Parametern und Videosequenzen.

FIG 7 zeigt ein Ausführungsbeispiel einer Anzeigetafel. In einem oberen Feld 25 wird, vorzugsweise in einer anderen Farbe als rot, der Flugzeugtyp angezeigt. Diese Anzeige dient der Sicherheit. Die Flugzeugführer können sich davon überzeugen, daß die errechneten und angezeigten Angaben sich tatsächlich auf das von Ihnen geführte Flugzeug beziehen. Beispielsweise können hier fünf gelbe Buchstabenfelder der Anzeige dienen. Gelb hat sich als gut sichtbar erwiesen.

In dem Feld 26 wird in vorzugsweise roter Farbe das Wort Stop oder ein anderes Haltesignal angezeigt. Diese Anzeige dient dem Abschluß des Parkiervorganges oder im Sinne einer Sicherheitsmaßnahme dem sofortigen Abbruch des Vorgangs.

Darunter sind in dem Feld 27 ein linkes und ein rechtes Feld angeordnet. Beide sind beispielsweise in sechzehn aufeinanderfolgende Einzelfelder aufgeteilt. Sie dienen der Anzeige der Abweichung von der Mittellinie. So kann beispielsweise eine entsprechende Anzeige dem Piloten darstellen, daß er mit geringem oder mit großem Einschlag nach links oder nach rechts fahren muß.

Das darunter senkrecht angeordnete Leuchtfeld 28 weist beispielsweise zweiunddreißig gelbe Einzelanzeigen auf, die den Piloten als Voraussignal dienen, also als Vorausfahrt mit geringer Geschwindigkeit oder mit höherer. Die Signaltafel weist ein Gehäuse 24, vorzugsweise wasserdicht, auf.

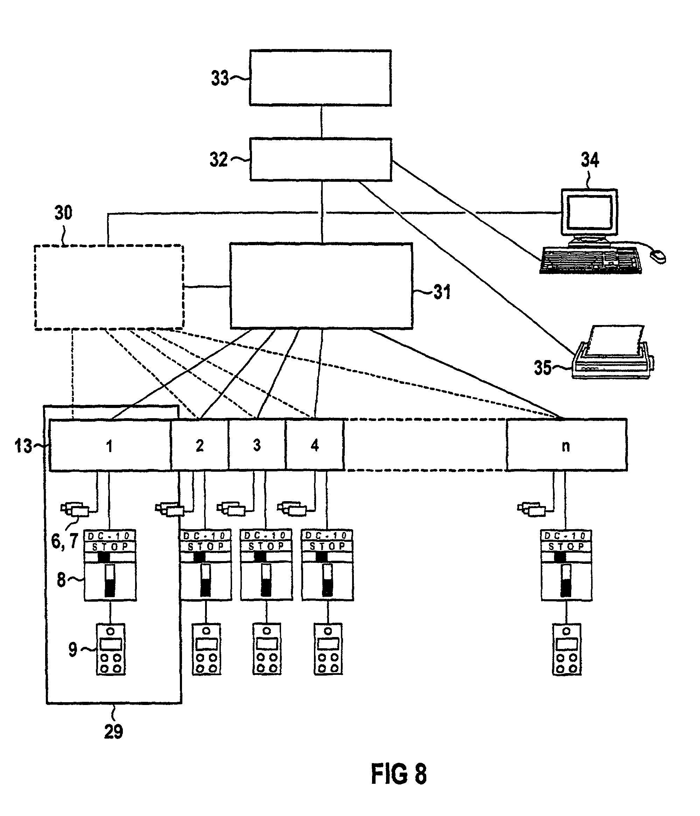

FIG 8 zeigt schematisch die Schaltungsorganisation einer entsprechenden Anlage auf einem Flughafen. Mit 29 ist die Anlage einer Station beziehungsweise eines Gates gezeigt. Diese Anlage enthält die beiden Kameras 6 und 7, die Anzeigetafel 8, das Bedienpanel 9 und eine Auswerteeinheit 13. Eine Vielzahl solcher Anlagen 1 bis N sind an den verschiedenen Gates 1 bis N angeordnet. Alle zusammen sind, vorzugsweise über serielle Verbinder, mit einem Kommunikationsnetz 31 für den Datenaustausch und mit einem Videonetz 30 für den Austausch von Videosequenzen ausgestattet. Das Videonetz kann auch über optische Verbinder organisiert sein, so daß eine Digitalisierung zur Anzeige von Videosequenzen erst später erfolgt, beispielsweise im Arbeitsplatzrechner des Controllers. Der Controller sitzt an einer sogenannten Gate-Planungsstelle 32. Äußere Ein- und Ausgänge 33 sind neben einem Rechner Arbeitsplatz 34 und einem Drucker 35 angeschlossen. Der Controller kann auf dem Rechnerarbeitsplatz 34 sowohl Daten als auch Videosequenzen zur Anzeige bringen. Vorzugsweise wird hierzu eine sogenannte Window-Technik verwendet, so daß Position, Größe und dergleichen der einzelnen Anzeigen bestimmt werden können.

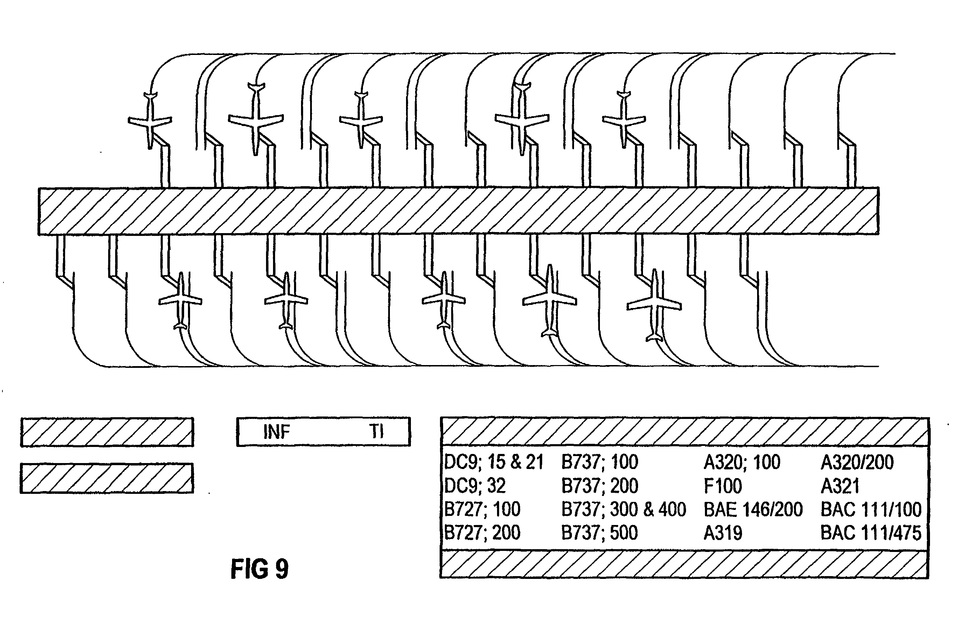

FIG 9 zeigt beispielhaft eine sogenannte graphische Informationsanzeige, die sich ein Controller auf den Monitor holen kann. Hier sind sämtliche verfügbaren Gates mit Belegungsdaten gezeigt. Darüber hinaus sind auch in unteren Datenfeldern Planungsdaten gezeigt.

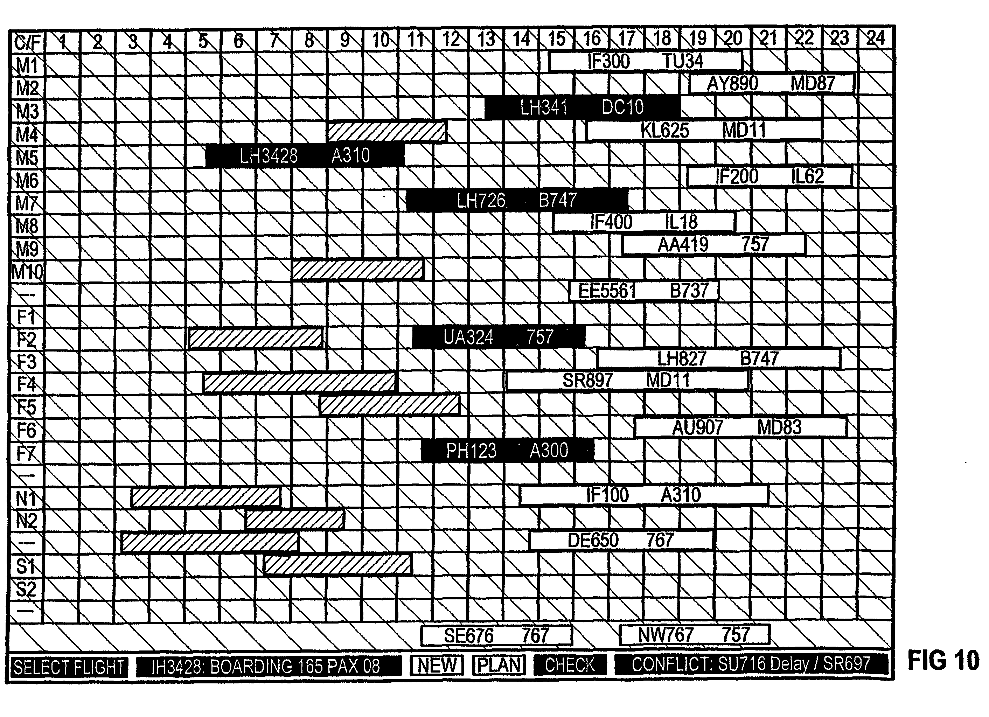

FIG 10 zeigt eine alternative Darstellung in Form von Belegungsfeldern. Auch ein solches, sogenanntes Managementdisplaysystem kann sich der Controller auf dem Bildschirm anordnen.

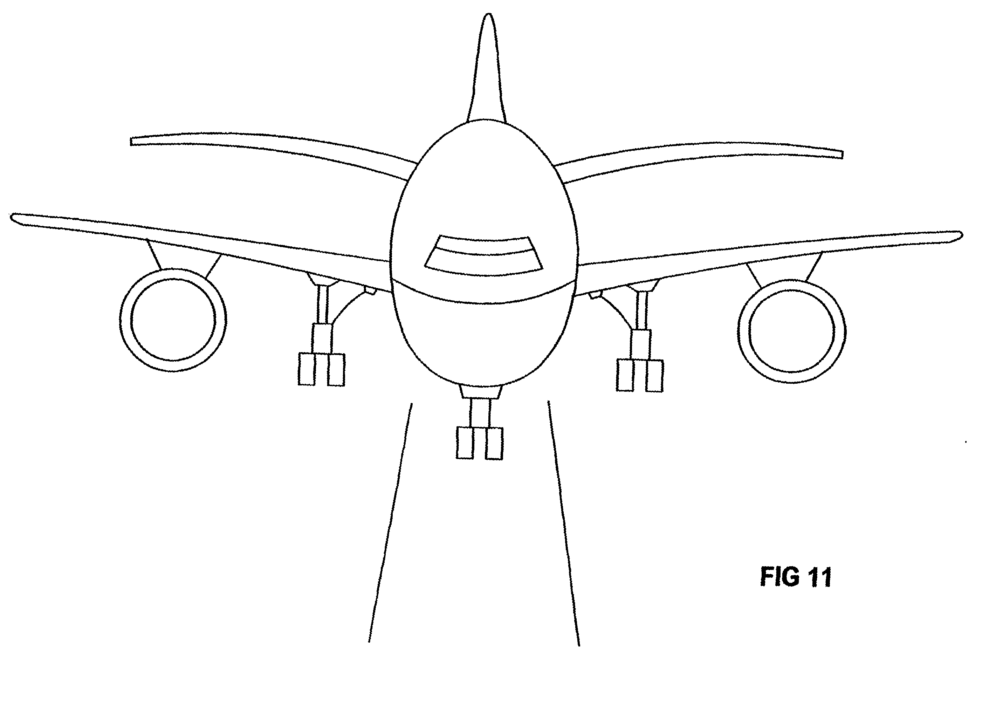

Schließlich zeigt FIG 11 beispielhaft eine Videosequenz, die sich der Controller auf dem Bildschirm positionieren und anordnen kann. Er kann vorzugsweise auch zoomen und Details erblicken. Auch kann er sich die Videosequenzen des jeweiligen Gates auf den Monitor holen, welches er zu überwachen gedenkt. Schließlich kann er über die Eingabeeinheiten des Rechnerarbeitsplatzes notfalls auch in das Geschehen eingreifen, beispielsweise indem er Anweisungen auf der Signaltafel erzeugt.

Die gezeigten Ausführungsbeispiele dienen nur der Erläuterung und sind nicht beschränkend.

## Patentansprüche

1. Verfahren zur automatisch unterstützten Führung von Luftfahrzeugen (3) zu einer Parkposition, mit welchem der Steuerung eines Luftfahrzeuges (3) automatisch Korrekturanweisungen für Richtung und Geschwindigkeit übermittelt werden, wobei mittels wenigstens einer Videokamera (6,6',7,7') ein in einer durch einen Erfassungsbereich (α1,α2) der wenigstens einen Videokamera (6,6',7,7') liegenden Parkzone befindliches Luftfahrzeug (3) mit der Videokamera (6,6',7,7') erfaßt und die von der Videokamera (6,6',7,7') gelieferten Signale in einer Auswerteeinheit (13) zur Ermittlung der aktuellen Position des Luftfahrzeuges (3) und der Korrekturanweisungen zum Erreichen einer vorgegebenen Position verarbeitet werden, **dadurch gekennzeichnet**, daß die von der Videokamera (6,6',7,7') gelieferten Signale in der Auswerteeinheit (13) weiterhin zu videosequenzen verarbeitet werden, daß aus den von der Videokamera (6,6',7,7') übermittelten Signalen eine Identifizierung erfaßter Nicht-Luftfahrzeug-Objekte durchgeführt wird und daß die Korrekturanweisungen zur Übermittlung an die Luftfahrzeugsteuerung sowie die Videosequenzen für die integrierte Darstellung zusammen mit weiteren Überwachungsdaten auf einem Kontrollmonitor bereitgestellt werden.

2. Verfahren nach Anspruch 1, **dadurch gekennzeichnet,** daß aus den von der wenigstens einen Videokamera (6,6',7,7') gelieferten Signalen der Luftfahrzeugtyp ermittelt wird.

3. Verfahren nach einem der vorhergehenden Ansprüche, **dadurch gekennzeichnet**, daß zwei Videokameras (6,6',7,7') mit im wesentlichen gleichem Erfassungsbereich (α1,α2) eingesetzt werden.

4. Verfahren nach einem der vorhergehenden Ansprüche, **dadurch gekennzeichnet**, daß die Videosequenzen als digitale Sequenzen bereitgestellt werden.

5. Verfahren nach Anspruch 4, **dadurch gekennzeichnet**, daß die Darstellung der Videosequenzen auf dem Kontrollmonitor positionierbar ist.

6. Verfahren nach einem der Ansprüche 4 oder 5, **dadurch gekennzeichnet**, daß die Darstellung der Videosequenzen auf dem Kontrollmonitor hinsichtlich der Größe einstellbar ist.

7. Verfahren nach einem der Ansprüche 4 bis 6, **dadurch gekennzeichnet**, daß die Videosequenzen zoombar sind.

8. Verfahren nach einem der vorhergehenden Ansprüche, **dadurch gekennzeichnet**, daß unterschiedliche Videosequenzen unterschiedlicher Parkzonen abrufbar bereitgestellt werden.

9. Verfahren nach einem der vorhergehenden Ansprüche, **dadurch gekennzeichnet**, daß die Videosequenzen gespeichert werden.

10. Verfahren nach einem der vorhergehenden Ansprüche, **dadurch gekennzeichnet**, daß die Videokameras (6,6',7,7') unterschiedlicher Parkzonen mit einer Auswerteeinheit (13) gekoppelt werden.

11. Verfahren nach einem der vorhergehenden Ansprüche, **dadurch gekennzeichnet**, daß zur Übermittlung der Korrekturanweisungen optische Verfahren verwendet werden.

12. Verfahren nach einem der vorhergehenden Ansprüche, dadurch gekennzeichnet, daß Umweltparameter erfaßt und für die Verarbeitung der von den Videokameras (6,6',7,7') zugeführten Signale berücksichtigt werden.

13. Vorrichtung zur automatisch unterstützten Führung von Luftfahrzeugen (3) zu einer Parkposition gemäß dem Verfahren nach wenigstens einem der vorhergehenden Ansprüche, mit wenigstens einer in einem Parkzonenbereich angeordneten Videokamera (6,6',7,7'), einer mit dieser verbundenen Auswerteeinheit (13), die der Auswertung der Videosignale zur Ermittlung von Korrekturwerten zur Führung des Luftfahrzeuges (3) dient, und einer Signalübermittlungseinheit (8,8') zur Übermittlung der Korrekturwerte an das Luftfahrzeug (3), **dadurch gekennzeichnet**, daß die Auswertung der Videosignale weiterhin zur Bereitstellung von Videosequenzen dient und daß die Vorrichtung zudem eine Videosequenzübermittlungseinheit (30) zur Bereitstellung der Videosequenzen zum Abruf durch Kontrollpersonal aufweist.

14. Vorrichtung nach Anspruch 13, **dadurch gekennzeichnet,** daß die Signalübermittlungseinheit (8,8') eine Signaltafel ist.

15. Vorrichtung nach einem der Ansprüche 13 oder 14, **dadurch gekennzeichnet**, daß im Parkzonenbereich wenigstens zwei Videokameras (6,6',7,7') im wesentlichen parallel angeordnet sind.

16. Vorrichtung nach einem der Ansprüche 13 bis 15, **dadurch gekennzeichnet,** daß die Auswerteeinheit (13) ein Rechner ist.

17. Vorrichtung nach einem der Ansprüche 13 bis 16, **dadurch gekennzeichnet,** daß mehrere Auswerteeinheiten (13) mit einer Zentraleinheit gekoppelt sind.

18. Vorrichtung nach einem der Ansprüche 13 bis 17, **dadurch gekennzeichnet**, daß eine Kontrolleinheit zur Datenein- und -ausgabe vorgesehen ist.

19. Vorrichtung nach einem der Ansprüche 13 bis 18, **dadurch gekennzeichnet**, daß diese mit einem Managementsystem des Flughafens zu Zwecken des Datenaustauschs gekoppelt ist.

20. Vorrichtung nach einem der Ansprüche 13 bis 19, **dadurch gekennzeichnet**, daß diese eine Speichereinheit für Videosequenzen umfaßt.

21. Vorrichtung nach einem der Ansprüche 13 bis 20, **dadurch gekennzeichnet**, daß diese ein Bedienpanel (9,9') zur manuellen Bedienung der Signalübermittlungseinheit (8,8') aufweist.

22. Managementsystem zum Betrieb der automatisch unterstützten Führung von Luftfahrzeugen (3) zu einer Parkposition mit einer Vorrichtung nach wenigstens einem der Ansprüche 13 bis 21, zusätzlich umfassend eine zentrale Kontrolleinheit mit einem Monitor zur integrierten Darstellung von Überwachungsdaten und den von der Auswerteeinheit (13) zur Auswertung der von der wenigstens einen Videokamera (6,6',7,7') im Parkzonenbereich bereitgestellten Videosignale zugeführten Videosequenzen, Ein- und Ausgabeeinheiten und einem Rechner.

23. Managementsystem nach Anspruch 22, **dadurch gekennzeichnet**, daß die Videosequenzen unterschiedlicher Parkzonen anwählbar sind.

24. Managementsystem nach einem der Ansprüche 22 oder 23, **dadurch gekennzeichnet**, daß die Datenanzeigen und die Anzeigen der Videosequenzen hinsichtlich Größe und Lage auf dem Kontrollmonitor variierbar sind.

25. Managementsystem nach einem der Ansprüche 22 bis 24, **dadurch gekennzeichnet**, daß die Videosequenzen speicherbar und abrufbar sind.

26. Managementsystem nach einem der Ansprüche 22 bis 25, **dadurch gekennzeichnet**, daß die von der Auswerteeinheit (13) ermittelten Korrekturanweisungen ergänzbar und/oder übersteuerbar sind.

## Claims

1. A method for automatically supported guidance of aircraft (3) to a parking position, by means of which correction instructions for direction and speed are automatically transmitted to the control of an aircraft (3), wherein, by means of at least one video camera (6,6',7,7'), an aircraft (3) located in a parking zone lying within a detection area (α1,α2) of the at least one video camera (6,6'7,7') is detected by the video camera (6,6',7,7') and the signals supplied by the video camera (6,6',7,7') are processed in an evaluation unit (13) in order to determine the current position of the aircraft (3) and the correction instructions to reach a predefined position, characterised in that the signals supplied by the video camera (6,6',7,7') are further processed in the evaluation unit (13) to produce video sequences, an identification of detected non-aircraft objects is carried out from the signals transmitted by the video camera (6,6',7,7'), and the correction instruction for transmission to the aircraft control as well as the video sequences for the integrated display are made available on a control monitor together with additional monitoring data.

2. A method according to claim 1, characterised in that the aircraft type is determined from the signals supplied by the at least one video camera (6,6',7,7').

3. A method according to one of the preceding claims, characterised in that two video cameras (6,6',7,7') with substantially identical detection areas (α1,α2) are used.

4. A method according to one of the preceding claims, characterised in that the video sequences are made available as digital sequences.

5. A method according to claim 4, characterised in that the position of the display of the video sequences is adjustable on the control monitor.

6. A method according to one of claims 4 or 5, characterised in that the display of the video sequences on the control monitor is variable with respect to size.

7. A method according to one of claims 4 to 6, characterised in that the video sequences are adjustable with respect to a zoom factor.

8. A method according to one of the preceding claims, characterised in that different video sequences of different parking zones can be made available for recall.

9. A method according to one of the preceding claims, characterised in that the video sequences can be stored.

10. A method according to one of the preceding claims, characterised in that the video cameras (6,6',7,7') of different parking zones are linked to an evaluation unit (13).

11. A method according to one of the preceding claims, characterised in that correction instructions are optically transmitted to the aircraft.

12. A method according to one of the preceding claims, characterised in that environmental parameters are determined and are taken into account for the processing of the signals supplied by the video cameras (6,6',7,7').

13. A device for automatically supported guidance of aircraft (3) to a parking position in accordance with the method according to at least one of the preceding claims, with at least one video camera (6,6',7,7') arranged within a parking zone area, an evaluation unit (13) connected with the video camera for the evaluation of the video signals in order to determine correction values for guidance of the aircraft (3), and a signal transmission unit (8,8') for transmitting the correction values to the aircraft (3), characterised in that the evaluation of the video signals is further used for making video sequences available, and the device additionally comprises a video sequence transmission unit (30) for making the video sequences available for call-up by control personnel.

14. A device according to claim 13, characterised in that the signal transmission unit (8,8') is a signal display panel.

15. A device according to one of claims 13 or 14, characterised in that at least two video cameras (6,6',7,7') are arranged within the parking zone area substantially parallel to one another.

16. A device according to one of claims 13 to 15, characterised in that the evaluation unit (13) is a computer.

17. A device according to one of claims 13 to 16, characterised in that a plurality of evaluation units (13) are linked to a central unit.

18. A device according to one of claims 13 to 17, characterised in that a control unit for data input and output is provided.

19. A device according to one of claims 13 to 18, characterised in that the device is linked to a management system of the airport for data exchange.

20. A device according to one of claims 13 to 19, characterised in that the device comprises a storage unit for video sequences.

21. A device according to one of claims 13 to 20, characterised in that the device comprises an operator panel (9,9') for manual operation of the signal transmission unit (8,8').

22. A management system for operating the automatically supported guidance of aircraft (3) to a parking position with a device according to at least one of claims 13 to 21, additionally comprising a central control unit with a monitor for the integrated display of monitoring data and the video sequences supplied by the evaluation unit (13) for the evaluation of the video signals made available by the at least one video camera (6,6',7,7') in the parking zone area, and comprising input and output units and a computer.

23. A management system according to claim 22, characterised in that the video sequences of different parking zones can be called up.

24. A management system according to one of claims 22 or 23, characterised in that the data display and the displays of the video sequences are variable on the control monitor with respect to size and position.

25. A management system according to one of claims 22 to 24, characterised in that the video sequences can be stored and recalled.

26. A management system according to one of claims 22 to 25, characterised in that it is possible to supplement and/or override the correction values determined by the evaluation unit (13).

## Revendications

1. Procédé de guidage à assistance automatique d'aéronefs (3) vers une place de stationnement, suivant lequel des instructions de correction concernant la direction et la vitesse sont transmises automatiquement pour le pilotage d'un aéronef (3), au moins une caméra (6, 6', 7, 7') vidéo détectant un aéronef (3) se trouvant dans une zone de stationnement située dans un champ (α1, α2) de détection de la ou des caméras (6, 6', 7, 7') vidéo, et les signaux délivrés par la caméra (6, 6', 7, 7') vidéo étant traités dans une unité (13) d'interprétation afin de déterminer la position actuelle de l'aéronef (3) et les instructions de correction pour atteindre une position prescrite,
**caractérisé** en ce que les signaux délivrés par la caméra (6, 6', 7, 7') vidéo sont en outre traités dans l'unité (13) d'interprétation en séquences vidéo, en ce qu'on effectue, à partir des signaux transmis par la caméra (6, 6', 7, 7') vidéo, une identification des objets détectés qui ne sont pas l'aéronef, et en ce que les instructions de correction à transmettre pour le pilotage de l'aéronef, ainsi que les séquences vidéo pour la représentation intégrée, sont fournies conjointement avec d'autres données de surveillance sur un écran de contrôle.

2. Procédé suivant la revendication 1, **caractérisé** en ce qu'on détermine à partir des signaux délivrés par la ou les caméras (6, 6', 7, 7') vidéo le type d'aéronef.

3. Procédé suivant l'une des revendications précédentes, **caractérisé** en ce qu'on utilise deux caméras (6, 6', 7, 7') vidéo ayant sensiblement le même champ (α1, α2) de détection.

4. Procédé suivant l'une des revendications précédentes, **caractérisé** en ce que les séquences vidéo sont fournies sous forme de séquences numériques.

5. Procédé suivant la revendication 4, **caractérisé** en ce qu'on peut positionner la représentation des séquences vidéo sur l'écran de contrôle.

6. Procédé suivant la revendication 4 ou 5, **caractérisé** en ce qu'on peut régler la taille de la représentation des séquences vidéo sur l'écran de contrôle.

7. Procédé suivant l'une des revendications 4 à 6, **caractérisé** en ce qu'on peut zoomer sur les séquences vidéo.

8. Procédé suivant l'une des revendications précédentes, **caractérisé** en ce qu'on fournit, avec possibilité d'appel sélectif, des séquences vidéo différentes de différentes zones de stationnement.

9. Procédé suivant l'une des revendications précédentes, **caractérisé** en ce qu'on mémorise les séquences vidéo.

10. Procédé suivant l'une des revendications précédentes, **caractérisé** en ce qu'on couple à une unité (13) d'interprétation les caméras (6, 6', 7, 7') vidéo de différentes zones de stationnement.

11. Procédé suivant l'une des revendications précédentes, **caractérisé** en ce qu'on utilise des procédés optiques pour transmettre les instructions de correction.

12. Procédé suivant l'une des revendications précédentes, **caractérisé** en ce qu'on détecte des paramètres d'environnement et on en tient compte pour le traitement des signaux apportés par les caméras (6, 6', 7, 7') vidéo.

13. Dispositif de guidage à assistance automatique d'aéronefs (3) vers une place de stationnement d'après le procédé suivant au moins l'une des revendications précédentes, comportant au moins une caméra (6, 6', 7, 7') vidéo disposée dans le champ d'une zone de stationnement, une unité (13) d'interprétation reliée à cette caméra et servant à interpréter les signaux vidéo afin de déterminer des valeurs de correction pour le guidage de l'aéronef (3), et une unité (8, 8') de transmission de signaux pour transmettre les valeurs de correction à l'aéronef (3), **caractérisé** en ce que l'interprétation des signaux vidéo sert en outre à fournir des séquences vidéo, et en ce que le dispositif comprend en outre une unité (30) de transmission de séquences vidéo, afin de fournir des séquences vidéo pouvant être appelées par le personnel de contrôle.

14. Dispositif suivant la revendication 13, **caractérisé** en ce que l'unité (8, 8') de transmission de signaux est un tableau de signaux.

15. Dispositif suivant la revendication 13 ou 14, **caractérisé** en ce qu'au moins deux caméras (6, 6', 7, 7') vidéo sont disposées essentiellement en parallèle dans le champ de la zone de stationnement.

16. Dispositif suivant l'une des revendications 13 à 15, **caractérisé** en ce que l'unité (13) d'interprétation est un ordinateur.

17. Dispositif suivant l'une des revendications 13 à 16, **caractérisé** en ce que plusieurs unités (13) d'interprétation sont couplées à une unité centrale.

18. Dispositif suivant l'une des revendications 13 à 17, **caractérisé** en ce qu'il est prévu une unité de contrôle pour l'entrée et la sortie de données.

19. Dispositif suivant l'une des revendications 13 à 18, **caractérisé** en ce que ce dispositif est couplé à un système de gestion de l'aéroport, afin d'échanger des données.

20. Dispositif suivant l'une des revendications 13 à 19, **caractérisé** en ce que ce dispositif comprend une unité de mémorisation de séquences vidéo.

21. Dispositif suivant l'une des revendications 13 à 20, **caractérisé** en ce que ce dispositif comporte un panneau de commande pour la commande manuelle de l'unité (8, 8') de transmission de signaux.

22. Système de gestion pour gérer le guidage à assistance automatique d'aéronefs (3) vers une place de stationnement au moyen d'un dispositif suivant au moins l'une des revendications 13 à 21, comprenant en outre une unité centrale de contrôle dotée d'un écran de contrôle pour la représentation intégrée de données de surveillance et des séquences vidéo apportées par l'unité (13) d'interprétation conçue pour interpréter les signaux vidéo fournis par la ou les caméras (6, 6', 7, 7') vidéo dans le champ de la zone de stationnement, et dotée d'unités d'entrée et de sortie et d'un ordinateur.

23. Système de gestion suivant la revendication 22, **caractérisé** en ce qu'on peut sélectionner les séquences vidéo de différentes zones de stationnement.

24. Système de gestion suivant la revendication 22 ou 23, **caractérisé** en ce qu'on peut faire varier la taille et la position des affichages de données et des affichages des séquences vidéo sur l'écran de contrôle.

25. Système de gestion suivant l'une des revendications 22 à 24, **caractérisé** en ce qu'on peut mémoriser et appeler sélectivement les séquences vidéo.

26. Système de gestion suivant l'une des revendications 22 à 25, **caractérisé** en ce qu'on peut compléter et/ou surpasser les instructions de correction déterminées par l'unité (13) d'interprétation.
